Europäisches Patentamt

European Patent Office

Office européen des brevets

(19)

(11) Veröffentlichungsnummer : **0 033 873**
**B1**

(12) **EUROPÄISCHE PATENTSCHRIFT**

(45) Veröffentlichungstag der Patentschrift :
**09.10.85**

(51) Int. Cl.⁴ : **B 62 D 13/02**

(21) Anmeldenummer : **81100478.7**

(22) Anmeldetag : **23.01.81**

(54) **Lastzug mit verkürztem Abstand zwischen Zugfahrzeug und Anhänger.**

(30) Priorität : 23.01.80 DE 3002354

(43) Veröffentlichungstag der Anmeldung :
**19.08.81 Patentblatt 81/33**

(45) Bekanntmachung des Hinweises auf die Patenterteilung : **09.10.85 Patentblatt 85/41**

(84) Benannte Vertragsstaaten :
**AT BE CH DE FR GB IT LI LU NL SE**

(56) Entgegenhaltungen :
**CH-A-   570 294**
**DE-U- 7 708 186**
**FR-A-   343 012**
**FR-A- 1 233 624**
**FR-A- 1 468 997**
**FR-A- 1 487 196**
**GB-A- 2 017 025**
**US-A- 1 748 976**

(73) Patentinhaber : **Meier, Arnold F.**
**Zum Mühlgraben 8**
**D-6842 Bürstadt (DE)**

(72) Erfinder : **Meier, Arnold F.**
**Zum Mühlgraben 8**
**D-6842 Bürstadt (DE)**

(74) Vertreter : **Blumbach Weser Bergen Kramer Zwirner**
**Hoffmann Patentanwälte**
**Radeckestrasse 43**
**D-8000 München 60 (DE)**

**Beschreibung**

Die Erfindung betrifft einen Lastzug nach dem Oberbegriff des Patentanspruchs 1.

Für einen solchen aus Zugfahrzeug und Anhänger bestehenden Lastzug ist eine maximale Gesamtlänge (in Deutschland beispielsweise 18 m) festgelegt, die nicht überschritten werden darf. Da zwischen dem Zugfahrzeug und dem Anhänger zur Ermöglichung von Kurvenfahrten ein Abstand eingehalten werden muß, enthält die maximale Gesamtlänge hier einen toten Raum, der nicht für den Transport genutzt werden kann. Dieser Abstand zwischen Zugfahrzeug und Anhänger ist im wesentlichen abhängig von der Breite des Zugfahrzeugs bzw. dessen Aufbaus und liegt herkömmlich etwa bei 1,60 m bzw. 2,00 m. Zur Ankopplung des Anhängers am Zugfahrzeug dient eine Anhängerkupplung, in der die Zuggabel des Anhängers verriegelt wird. Diese Anhängerkupplung wird in der Regel an einem Querträger am hinteren Ende des Zugfahrzeugrahmens befestigt.

Es sind bereits verschiedene Lösungsvorschläge dafür bekannt geworden, den Abstand zwischen dem Zugfahrzeug und dem Anhänger eines Lastzuges zu verringern. So entnimmt man der FR-A-1 233 624 die dort allerdings nur theoretisch erörterte Möglichkeit, die Angriffspunkte der das Zugfahrzeug und den Anhänger verbindenden Deichsel am Zugfahrzeug etwa 3 m vor dem hinteren Ende des Zugfahrzeugs und am Anhänger etwa 3 m hinter dem vorderen Endes des Hängers anzuordnen. Diese Lösung soll zwar zu einem Abstand von nur 50 cm zwischen Zugfahrzeug und Anhänger führen, sie bedeutet aber zugleich insbesondere für den Anhänger eine derart unsymmetrische Anordnung der Achsen, daß erhebliche Einschränkungen im Fahrverhalten und insbesondere auch hinsichtlich der Rangiermöglichkeiten hingenommen werden müssen.

Aus der CH-A-570 294 ist ein Lastzug bekannt, bei dem die Anhängerkupplung unterhalb des Fahrzeugrahmens an einer gegenüber dem hinteren Ende des Zugfahrzeugs nach vorne versetzten Stelle angeordnet ist. Der Anhänger greift über eine mit einem Gelenk versehene und längenverstellbare Zuggabel in die Anhängerkupplung ein. Der Teil der Zuggabel, der zwischen deren Gelenk und der Anhängerkupplung sitzt, wird mit Hilfe eines zusätzlichen Hebels in Horizontalrichtung gegenüber dem Fahrzeugrahmen unverschwenkbar gehalten, wobei das Gelenk der Zuggabel etwa in den Bereich des hinteren Endes des Zugfahrzeugs dort, wo gewöhnlich die Anhängerkupplung sitzt, angeordnet ist. Verschiedene Hebel und Wiegen dienen dazu, die wirksame Länge der Zuggabel abhängig von einem Einschlag der Lenkachse des Anhängers sowie abhängig von einer Verschwenkung der der Zuggabel um ihr erwähntes Gelenk zu steuern. Diese bekannte Lösung ist unter anderem deshalb kompliziert, weil das Ankuppeln und Abkuppeln des Anhängers am Zugfahrzeug nicht auf die gleiche einfache Weise wie bei gewöhnlichen Lastzügen möglich ist. Darüberhinaus ergeben sich durch die der Längenverstellbarkeit der Zuggabel dienenden Hebel gravierende Einschränkungen beim Rangieren, da diese Hebel keine beliebigen Schwenkwinkel der Lenkachse des Anhängers einerseits bzw. der Zuggabel um ihr Gelenk andererseits erlauben.

Eine ausschließlich auf einer Längenveränderung der Zuggabel abhängig vom Einschlagwinkel der Lenkachse des mehrachsigen Anhängers beruhende Lösung beschreibt das DE-U-77 08 186. Diese Lösung schließt eine Zusammenstoßen beim Rangieren, insbesondere beim Rückwärtsfahren nicht aus, wenn das zurücksetzende Zugfahrzeug die Zuggabel des Anhängers in Richtung Geradeausstellung zurückschwenkt, während zugleich eine relative Verschwenkung zwischen der Zuggabel und dem Zugfahrzeug auftritt.

Die vorbeschriebenen bekannten Losungen betreffen sämtlich einen Lastzug mit einem mehrachsigen Anhänger, dessen vordere Achse als Lenkachse ausgebildet ist. Dies gilt auch für den in der DE-OS 28 08 173 beschriebenen Lastzug, bei dem der Abstand zwischen Zugfahrzeug und Anhänger dadurch verringert wird, daß die Zuggabel am Zugfahrzeug starr, das heißt in der horizontalen Ebene nicht schwenkbar angekuppelt wird.

Aufgabe der Erfindung ist es, durch Verringerung des Abstands zwischen dem Zugfahrzeug und dem Anhänger ohne Einschränkung der Kurvenfähigkeit des Lastzugs den nutzbaren Teil der Gesamtlänge des Lastzugs zu vergrößern.

Diese Aufgabe wird bei einem Lastzug der im Oberbegriff des Patentanspruchs 1 angegebenen Art erfindungsgemäß durch die Merkmale im kennzeichnenden Teil dieses Anspruchs gelöst.

Es hat sich gezeigt, daß durch Verschiebung des Anlenkpunkts des Anhängers am Zugfahrzeug in Vorwärtsfahrtrichtung eine erhebliche Verringerung des Abstands zwischen dem Zugfahrzeug und dem Anhänger auf beispielsweise 70 cm erreicht werden kann, natürlich ohne daß im Fall einer Kurvenfahrt Zugfahrzeug und Anhänger mit ihren Aufbauten oder Rahmen aneinanderstoßen. Bezeichnet man den Abstand zwischen dem Anlenkpunkt bzw. dem Kupplungsmaul und dem hinteren Ende des Zugfahrzeugs mit a, die halbe Breite des Zugfahrzeugs an diesem hinteren Ende mit d und den Abstand zwischen dem Zugfahrzeug und dem Anhänger b, dann führt eine Drehung des Anhängers um den Anlenkpunkt seiner Zuggabel am Zugfahrzeug dann nicht zu einem gegenseitigen Anstoßen zwischen Zugfahrzeug und Anhänger, wenn nachstehende Bedingung erfüllt ist:

$$a > (d^2-b^2)/2b$$

Der Verschiebung der Anhängerkupplung nach vorne ist eine praktische Grenze durch die Hinterachse des Zugfahrzeugs gesetzt. Eine weitere, vom Einzelfall abhängende Grenze ergibt sich daraus, daß bei Kurvenfahrten der Winkel zwischen den Längsachsen von Zugfahrzeug und Anhänger nicht beliebig groß werden darf, da andernfalls das geforderte Kurvenverhalten nicht mehr erfüllt wird.

Zwischen dem durch die obige Beziehung festgelegten Mindestwert von a und den angegebenen Grenzen kann die Lage der Kupplung im Einzelfall nach praktischen Gesichtspunkten festgelegt werden.

Die volle Ausnutzung der oben angegebenen Beziehung, die ja die Verschwenkung des Anhängers um seinen Anlenkpunkt am Zugfahrzeug betrifft, geht strenggenommen nur für einen Anhänger, bei dem die Zuggabel starr mit dem Hängerrahmen verbunden ist, wie dies beispielsweise bei einem Tandemanhänger der Fall ist. Handelt es sich hingegen um einen normalen zweiachsigen Anhänger, dessen mit der Zuggabel verbundene vordere Achse als drehbare Lenkachse ausgebildet ist, dann muß die Drehung des Anhängers um die Drehachse dieser Lenkachse durch eine Längenänderung der Zuggabel gemäß den Merkmalen des Patentanspruchs 1 zusätzlich berücksichtigt werden.

Verschiedene Ausgestaltungen der Erfindung zur Erzielung dieser Längenänderung sind in den Unteransprüchen enthalten.

Das Ankuppeln und Abkuppeln des Anhängers an dem Zugfahrzeug ist aus zwei Gründen genauso problemlos wie bei üblichen Lastzügen mit langem Abstand zwischen Zugfahrzeug und Anhängern. Der eine Grund liegt darin, daß die Kupplung zwischen den beiden Fahrzeugteilen ausschließlich durch den Eingriff des Kupplungsauges der Zuggabel in das Kupplungsmaul der Anhängerkupplung erfolgt. Infolge der Fernbedienung für die Anhängerkupplung ist es zum anderen für das An- und Abkuppeln nicht erforderlich, daß jemand unter das Zugfahrzeug zur Anhängerkupplung kriechen muß. Der mit der Erfindung erzielbare kurze Abstand zwischen dem Zugfahrzeug und dem Anhänger beeinträchtigt die Rangierfähigkeit des Lastzugs in keiner Weise, es sind vielmehr alle Rangiermanöver durchführbar, die auch ein ganz normaler Lastzug zuläßt. Das Fahrverhalten des erfindungsgemäßen Lastzugs ist deutlich besser als dasjenige der weiter oben beschriebenen bekannten Lösungen. Durch die erfindungsgemäße Ankupplung des Anhängers wirken sich seitliche Bewegungen des Zugfahrzeugs, die bei normaler Geradeausfahrt durch ungleichmäßige Fahrbahnen etc. unausweichlich sind, nur gering auf den Anhänger aus, das heißt, sie führen nur zu minimalen Auslenkungen der Lenkachse des Anhängers. Dadurch werden der Reifenverschleiß und der Treibstoffverbrauch deutlich verringert, letzteres deshalb, weil der Anhänger erheblich weniger aus dem Windschatten des Zugfahrzeugs herausläuft als bei bekannten Lastzügen. Die infolge der vorne liegenden Anhängerkupplung lange Zuggabel ergibt ein wesentlich besseres Bremsverhalten als eine kürzere Zuggabel. Dies beruht darauf, daß bei gleicher Auslenkung des Anhängers relativ zum Zugfahrzeug die längere Zuggabel einen kleineren Winkel mit der Längsachse des Zugfahrzeugs einschließt, so daß beim Bremsen die Gefahr erheblich verringert ist, daß das Zugfahrzeug von dem auflaufenden Anhänger hinten zur Seite geschoben wird. Die unterhalb des Fahrzeugrahmens und damit relativ nahe zur Fahrbahn liegende Anhängerkupplung reduziert Auswirkungen einer Schieflage des Zugfahrzeugs (wenn beispielsweise die Hinterräder auf einer Seite durch ein Schlagloch fahren) auf den Anhänger.

Die Erfindung wird nachstehend unter bezug auf die beiliegenden Zeichnungen an Ausführungsbeispielen erläutert.

Es zeigen :

Figur 1 einen Lastzug gemäß einer Ausführungsform der Erfindung in einer schematischen Seitenansicht,

Figur 2 schematisch eine Draufsicht auf den Lastzug von Fig. 1,

Figur 3 schematisch eine Seitenansicht der Lenkachse des Anhängers von Fig. 1 mit der zur Längenänderung der Zuggabel vorgesehenen Vorrichtung,

Figur 4 eine Ansicht gemäß der Linie VI-VI in Fig. 3, teilweise aufgeschnitten und

Figuren 5 und 6 den Fig. 3 und 4 entsprechende, jedoch vergrößerte Ansichten einer anderen Ausführungsform.

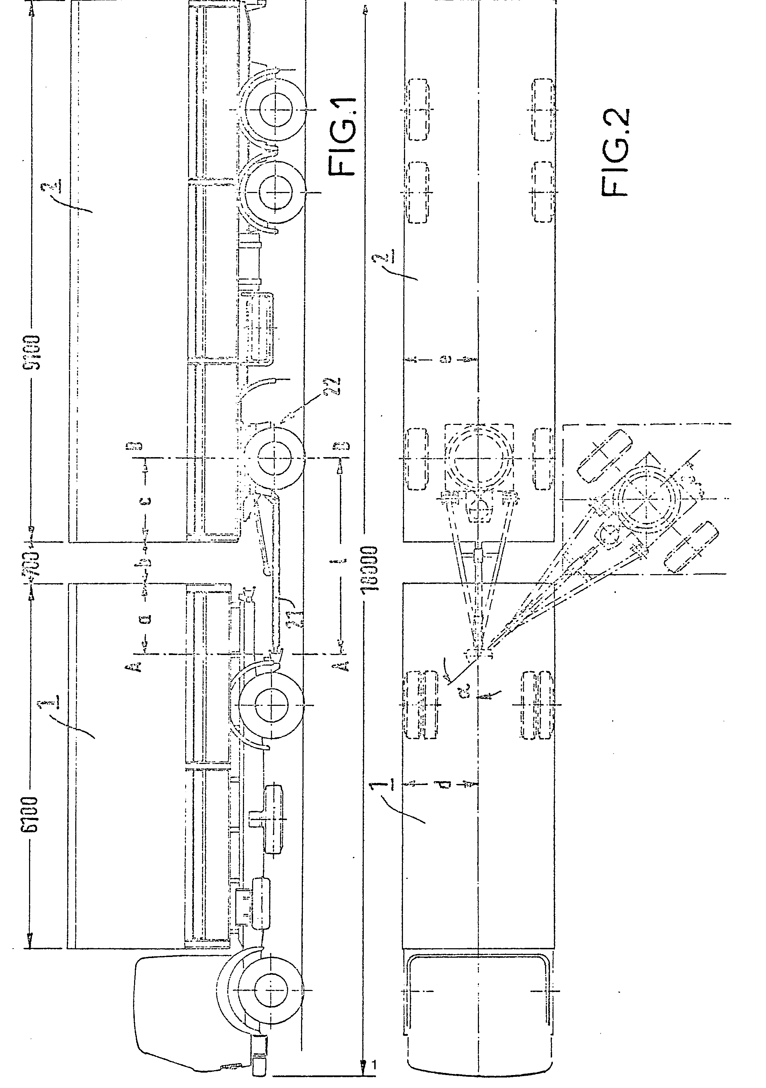

Fig. 1 zeigt schematisch eine Seitenansicht des Lastzugs, Fig. 2 eine Draufsicht und gestrichelt den Zustand bei einer ca. 90°-Verschwenkung zwischen Lastzug und Anhänger. Es muß hier einerseits eine Drehung zwischen Zugfahrzeug 1 und Anhänger 2 um den Anlenkpunkt am Zugfahrzeug, das heißt um die in Fig. 1 mit A-A bezeichnete Achse und andererseits noch eine zusätzliche Drehung um die in Fig. 1 mit B-B bezeichnete Drehachse der Lenkachse 22 des Anhängers 2 berücksichtigt werden. In diesem Fall kann dadurch, daß der Abstand a die angegebene Beziehung

$$a > (d^2-b^2)/2b$$

erfüllt, allein noch nicht gewährleistet werden, daß für alle möglichen Winkelkombinationen des von der Zuggabel 21 mit der Längsmittelachse des Zugfahrzeugs gebildeten Winkels $\alpha$ einerseits und mit der Längsmittelachse des Anhängers gebildeten Winkels $\beta$ andererseits ein Aneinanderstoßen von Zugfahrzeug 1 und Anhänger 2 vermieden wird. Bezeichnet man den Abstand der Drehachse B-B der Lenkachse 22 des Anhängers vom vorderen Ende des Anhängers mit c (siehe Fig. 1) und die halbe Breite des Anhängers mit e (siehe Fig. 2), dann gilt für diesen Fall vielmehr :

$$b > \sqrt{a^2 + d^2} - a + \sqrt{c^2 + e^2} - c$$

3

Setzt man als Beispiel voraus, daß c = a und e = d, dann müßte also der Abstand b zwischen dem Zugfahrzeug 1 und dem Anhänger 2 genau doppelt so groß sein wie im Fall eines Anhängers ohne Lenkachse. Diese Vergrößerung des Abstands b kann dadurch vermieden werden, daß die Länge 1 zwischen den Drehachsen A-A und B-B, die hier als die wirksame Länge der Zuggabel bezeichnet werden soll, bei einer Drehung der Lenkachse 22 um ihre Drehachse B-B verändert wird. Das heißt, man wählt

$$1 = a + c + b + \Delta b,$$

wobei

$$\Delta b = f(\beta)$$

eine Funktion des bereits definierten Winkels β ist.

Für β = 0 ist Δb = 0. Für β = arctg (e/c) ist Δb = Δb$_{MAX}$, wobei Δb$_{MAX}$ die maximale Verlängerung der wirksamen Länge der Zuggabel ist und als Hub bezeichnet werden soll. Vorausgesetzt ist, daß der Wert von c nicht kleiner als der von a ist, was in der Praxis als erfüllt angesehen werden kann.

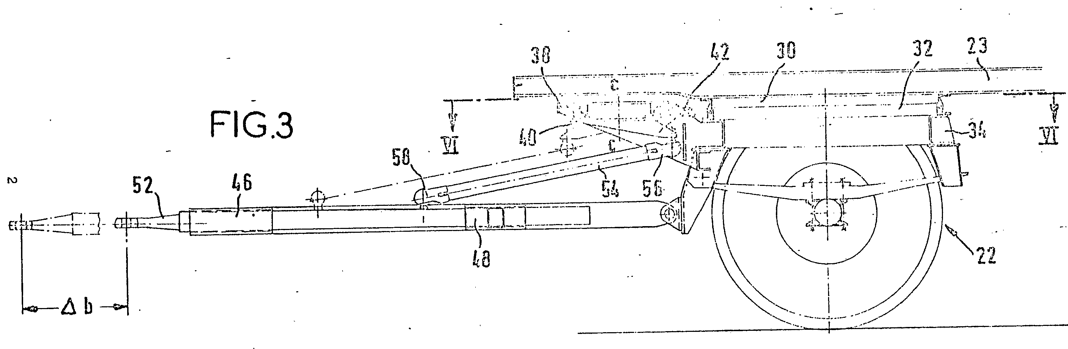

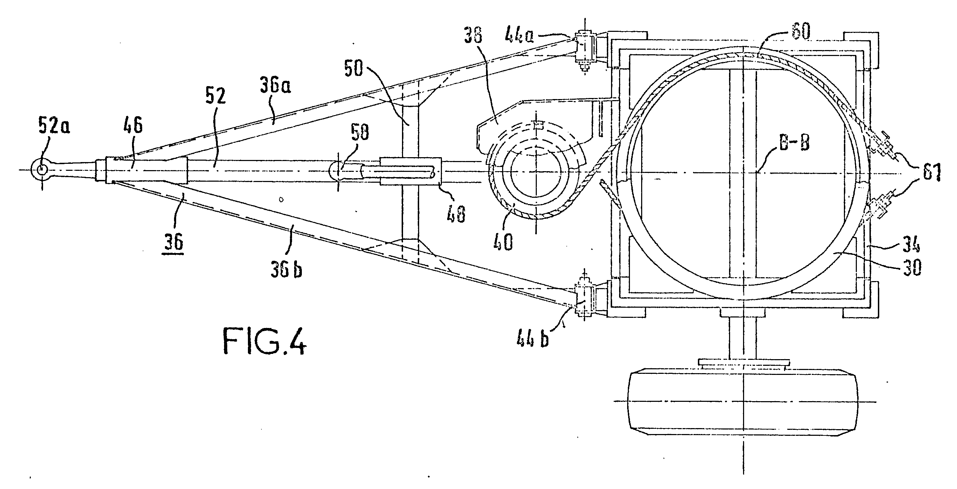

Die Fig. 3 und 4 zeigen schematisch in einer Seitenansicht und einer Draufsicht eine erste Ausführungsform der Zuggabel 21 mit veränderbarer wirksamer Länge 1, die als Ausschubzuggabel bezeichnet werden soll. In Fig. 3 bezeichnet 23 einen Teil des Hängerrahmens, an dessen Unterseite das stationäre Teil 30 eines Kugeldrehkranzes auf geeignete Weise befestigt ist. Das untere Teil 32 dieses Kugeldrehkranzes trägt seinerseits ein der Achsaufhängung dienendes Drehgestell 34. Das Drehgestell 34 ist mit einem in Richtung der eigentlichen Gabel 36 weisenden Ausleger 38 verbunden. An der Unterseite dieses Auslegers 38 ist ein weiterer Kugeldrehkranz befestigt, dessen bewegliches Teil 40 eine Art Kurbelarm 42 trägt.

Wie aus Fig. 4 erkennbar, besitzt die Gabel 36 zwei Arme 36a, 36b, die über zwei Gelenke 44a bzw. 44b am Drehgestell 34 angelenkt sind. An ihrem vorderen Ende tragen die beiden Arme 36a und 36b gemeinsam eine Hülse 46. Eine weitere Hülse 48 wird von einem die Gabelarme 36a und 36b verbindenden Zwischenträger 50 im Abstand von der Hülse 46 gehalten. In den Hülsen 46 und 48 ist eine Schubstange 52 verschiebbar aufgenommen. Am vorderen Ende ist die Schubstange mit einer Zugöse 52a versehen. Über eine Art Pleuelstange 54, die über ein jeweiliges Kreuz-, Kugelgelenk 56, 58 oder dergl. einerseits am Kurbelarm 42 und andererseits an der Schubstange 52 angelenkt ist, kann eine Drehung des Kurbelarms 42 um seine Drehachse C-C in eine Schub- bzw. Zugbewegung der Schubstange 52 relativ zur Gabel 36 umgesetzt werden. Das auch als Unterring bezeichnete bewegliche Teil 40 des zweiten Kugeldrehkranzes und das auch als Oberring zu bezeichnende stationäre Teil des ersten Kugeldrehkranzes sind jeweils an ihrem äußeren Umfang als Seilrad ausgebildet. Ein Seil 60 ist in der aus Fig. 4 erkennbaren Weise um diese beiden Seilräder gelegt. Beide Enden des Seils 60 sind aus der ebenfalls in Fig. 4 erkennbaren Weise am Hängerrahmen befestigt. Aufgrund dieser Seilführung bewirkt eine Drehung der Lenkachse 22 und damit der Ausschubzuggabel 21 um die Drehachse B-B im Uhrzeigersinn (in Fig. 4) eine Drehung des Kurbelarms 42 im Gegenuhrzeigersinn. Ist der Kurbelarm 42 gemäß Darstellung in Fig. 3 für den Fall β = 0 mit der Längsmittelachse des Anhängers 2 ausgerichtet, dann wird die Schubstange 52 als Folge der gerade erwähnten Drehung des Kurbelarms 42 nach vorne aus der Hülse 46 herausgeschoben, so daß die wirksame Länge 1 größer wird. Handelt es sich bei der Schubstange um ein Rohr, dann kann z. B. durch Wahl der Art der Gelenke 56, 58 eine Drehung des Rohres in den Hülsen 46 und 48 verhindert werden.

Durch geeignete Wahl der Durchmesser von Unterring 40 einerseits und Oberring 30 andererseits erreicht man ein gewünschtes Übersetzungsverhältnis zwischen dem Winkel β und dem Drehwinkel des Kurbelarms 42. Durch die Bemessung dieses Übersetzungsverhältnisses kann gewährleistet werden, daß die wirksame Länge der Auschubzuggabel bei dem richtigen Lenkeinschlag der Lenkachse 22 um den vollen Hub ausgefahren ist.

Der voranstehend beschriebene Aufbau der Ausschubzuggabel besitzt einen weiteren Vorteil dadurch, daß sich die wirksame Länge 1 nicht nur abhängig vom Winkel β, sondern auch abhängig von einer Neigung der Gabel gegenüber der Horizontalen ändert. Wenn insbesondere die Gabel 36 um die Gelenkachse der Gelenke 44a und 44b nach oben (Uhrzeigersinn in Fig. 4) geklappt wird, wie es beim Überfahren von Bodenwellen der Fall ist, wird die Schubstange 52 auch ohne Lenkeinschlag der Lenkachse 22 ausgeschoben und dadurch verhindert, daß der Aufbau von Zugfahrzeug und Anhänger oben zusammenstoßen.

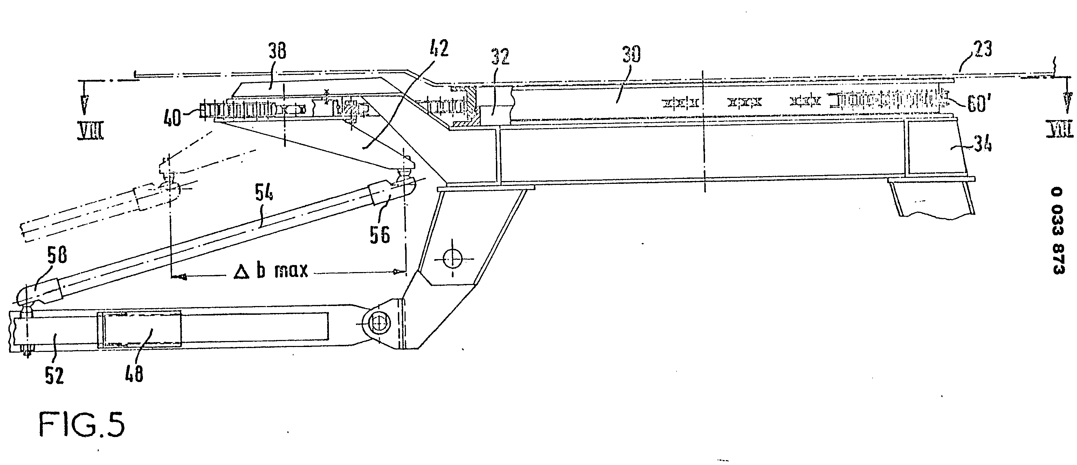

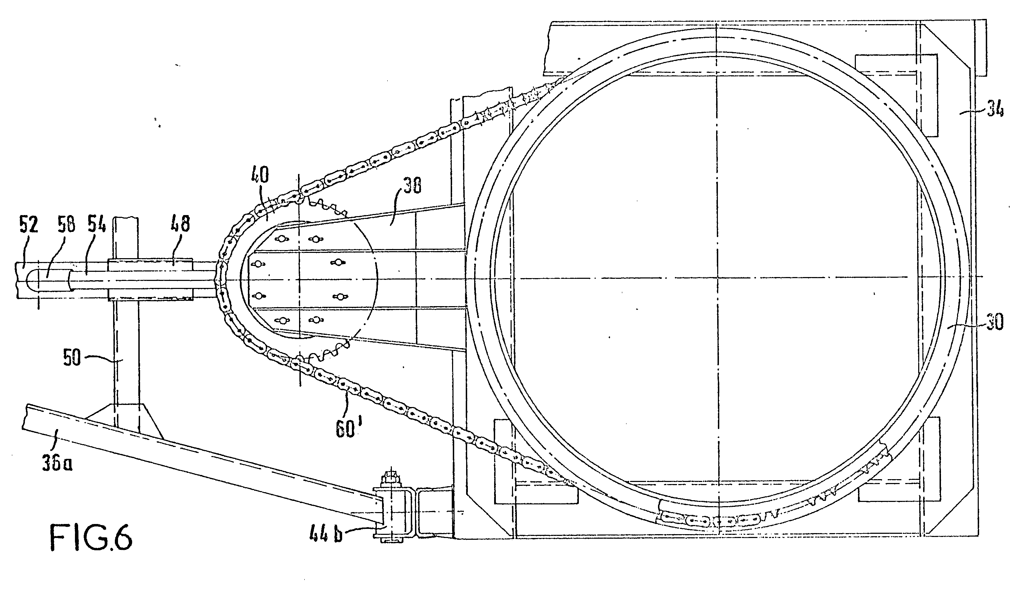

Die Fig. 5 und 6 zeigen eine andere Ausführungsform der Ausschubzuggabel in etwas vergrößerter Darstellung. Abweichend von der vorhergehenden Ausführungsform wird die Drehung des Kurbelarms 42 hier nicht über ein Seil, sondern über eine Kette 60' erreicht. An dem Ausleger 38 ist drehbar ein Zahnrad 40' gelagert, das den Kurbelarm 42 trägt. Es kann wiederum ein Kugeldrehkranz vorgesehen sein, dessen Unterring außen als Zahnkranz ausgebildet ist. In entsprechender Weise ist der Oberring 30' des Kugeldrehkranzes für das Drehgestell als Zahnrad oder Zahnkranz ausgebildet. Die Verwendung einer Kette in Verbindung mit Zahnrädern oder Zahnkränzen anstelle eines Seils führt zu einem besseren Eingriff und zu einer rutschfesten, relativ spielfreien Drehübertragung. Der starre Eingriff zwischen der Kette 60' und dem Zahnkranz 30' macht darüberhinaus eine Verbindung der Kette mit dem Hängerrahmen entbehrlich. Die Kette kann vielmehr eine endlose Schleife sein. Durch die fehlende Verbindung zwischen der Kette und dem Hängerrahmen ist es bei dieser zweiten Ausführungsform der Ausschubzuggabel möglich, daß die Lenkachse 22 um volle 360° um ihre Drehachse B-B gedreht wird.

Im übrigen entspricht der Aufbau der Ausschubzuggabel der Ausführungsform nach den Fig. 5 und 6 demjenigen der vorhergehenden Ausführungsform, so daß diesbezüglich eine nochmalige Erläuterung entbehrlich ist und im übrigen bezüglich der Einzelheiten auf die Darstellung in den Figuren verwiesen wird. Angemerkt sei nur noch, daß die Führung des Seils 60 in Form einer 8 bei der Ausführungsform der Fig. 3 und 4 einen größeren Lenkwinkel β der Lenkachse 22 erlaubt, als es bei Führung des Seils 60 in Form eines 0 möglich wäre. Der Lenkwinkel β ist bei dieser Ausführungsform dadurch begrenzt, daß die zur Verankerung des Seils 60 am Hängerrahmen 23 dienenden Spannschlösser 61 (Fig. 4) in den Seilführungsbereich zwischen den beiden Seilrädern 30 und 40 gelangen. Bei Führung des Seils in der dargestellten Form können die Spannschlösser 61 ohne Funktionsbeeinträchtigung weiter in den Bereich zwischen den genannten Seilrädern hineinlaufen, als es bei einer anderen Seilführung der Fall wäre.

## Patentansprüche

1. Anhänger mit einer Lenkachse (22) und einer mit dieser verbundenen Zuggabel (21), welche ein zur Längenänderung abhängig vom Einschlagwinkel (β) der Lenkachse (22) ausfahrbares Teil (52) aufweist, zur Verwendung in Verbindung mit einem Zugfahrzeug, das eine Anhängerkupplung besitzt, die unterhalb des Fahrzeugrahmens (11) des Zugfahrzeugs gegenüber dem hinteren Fahrzeugende in Vorwärtsfahrtrichtung versetzt angeordnet ist, dadurch gekennzeichnet, daß an einem vom achsseitigen Teil (32, 34) der Lenkachsaufhängung getragenen Ausleger (38) ein Kurbelarm (42) drehbar befestigt ist, der über eine Einrichtung zur Bewegungsübertragung (54) mit dem ausfahrbaren Teil (52) der Zuggabel (21) verbunden ist und daß der Kurbelarm (42) über Zugmittel (60, 60') mit dem am Rahmen (23) des Anhängers befestigten Teil (30, 30') der Lenkachsaufhängung bzw. mit dem Rahmen (23) selbst derart verbunden ist, daß eine Drehung der Lenkachse (22) zu einer Drehung des Kurbelarms (42) um seine Drehachse (C-C) und diese zu einer Bewegung des ausfahrbaren Teils (52) der Zuggabel (36) führt.

2. Anhänger nach Anspruch 1, dadurch gekennzeichnet, daß die Zugmittel ein Seil (60) sind, das einerseits um ein gegenüber dem Rahmen (23) des Anhängers starr angeordnetes Seilrad 30 und andererseits um ein mit dem Kurbelarm (42) starr verbundenes Seilrad (40) geschlungen ist und dessen beide Enden am Fahrzeugrahmen befestigt sind.

3. Anhänger nach Anspruch 1, dadurch gekennzeichnet, daß die Zugmittel eine Endloskette (60') sind, die einerseits um einen gegenüber dem Rahmen (23) des Anhängers starr angeordneten Zahnkranz (30') und andererseits um einen mit dem Kurbelarm (42) verbundenen Zahnkranz geführt ist.

4. Anhänger nach einem der vorhergehenden Ansprüche, dadurch gekennzeichnet, daß bei einer Verschwenkung der Zuggabel (36) um eine horizontale Achse das ausfahrbare Teil (52) unabhängig von einem Einschlag der Lenkachse (22) bewegbar ist.

5. Anhänger nach einem der vorhergehenden Ansprüche, dadurch gekennzeichnet, daß das Übersetzungsverhältnis zwischen dem Drehwinkel (β) der Lenkachse (22) um ihre Drehachse (B-B) zum Drehwinkel des Kurbelarms (42) um seine Drehachse (C-C) kleiner als 1/2 ist und vorzugsweise (arctg (e/c))/180° beträgt, wobei e die halbe Breite des Anhängers und c der Abstand zwischen dem vorderen Ende des Anhängers und der Drehachse B-B seiner Lenkachse (22) ist.

## Claims

1. A trailer having a steering axle (22) and a draw yoke (21) which is connected thereto and which has a portion (52) which is extendable for the purposes of variation in length in dependence on the angle of lock (β) of the steering axle (22), for use in conjunction with a tractor vehicle which has a trailer coupling which is disposed beneath the chassis (11) of the tractor vehicle at a position in which it is displaced in the direction of forward travel relative to the rearward end of the vehicle, characterised in that a crank arm (42) is rotatably secured to a cantilever arm (38) carried by the part (32, 34) of the steering axle suspension, which is towards the axle, which crank arm (42) is connected by way of a motion transmission means (54) to the extendable portion (52) of the draw yoke (21) and that the crank arm (42) is connected by way of traction means (60, 60') to the part (30, 30') of the steering axle suspension, which is secured to the chassis (23) of the trailer, or to the chassis (23) itself, in such a way that a rotary movement of the steering axle (22) results in a rotary movement of the crank arm (42) about its axis of rotation (C-C) and said latter rotary movement results in a movement of the extendable portion (52) of the draw yoke (36).

2. A trailer according to claim 1, characterised in that the traction means are a cable (60) which is wound on the one hand around a cable wheel (30) which is arranged rigidly with respect to the chassis (23) of the trailer and on the other hand around a cable wheel (40) which is rigidly connected to the crank arm (42), the two ends of the cable being secured to the vehicle chassis.

3. A trailer according to claim 1, characterised in that the traction means are an endless chain (60') which is passed on the one hand around a ring gear (30) which is arranged rigidly with respect to the chassis (23) of the trailer and on the other hand around a ring gear which is connected to the crank arm (42).

4. A trailer according to one of the preceding claims characterised in that, upon a pivotal movement of the draw yoke (36) about a horizontal axis, the extendable portion (52) is movable independently of a turning movement of the steering axle (22).

5. A trailer according to one of the preceding claims characterised in that the transmission ratio between the angle of rotation ($\beta$) of the steering axle (22) about its axis of rotation (B-B) and the angle of rotation of the crank arm (42) about its axis of rotation (C-C) is lower than 1/2 and is preferably (arctg (e/c))/180°, wherein e is half the width of the trailer and c is the spacing between the front end of the trailer and the axis of rotation (B-B) of its steering axle (22).

**Revendications**

1. Remorque comportant un essieu orientable (22) et une fourche d'attelage (21) reliée à cet essieu et qui comporte une partie (52) pouvant être déployée pour réaliser une modification de la longueur, en fonction de l'angle de braquage ($\beta$) de l'essieu orientable (22), du type prévu pour être utilisée en liaison avec un véhicule tracteur qui possède un attelage de remorque qui est disposé au-dessous du châssis (11) du véhicule tracteur, en étant décalé suivant la direction d'avance, par rapport à l'extrémité arrière du véhicule, caractérisée par le fait que sur un bras en console (38) porté par la partie (32, 34), située du côté de l'essieu, de la suspension de l'essieu orientable, se trouve fixé, de manière à pouvoir pivoter, un bras de manivelle (42) qui est relié par l'intermédiaire d'un dispositif de transmission de déplacement (54), à la partie (52), pouvant être déployée, de la fourche d'attelage (21), et que le bras de manivelle (42) est relié par l'intermédiaire de moyens de traction (60, 60') à la partie (30, 30'), fixée sur le châssis (23) de la remorque, de la suspension de l'essieu orientable ou au châssis (23) lui-même, de telle sorte qu'une rotation de l'essieu orientable (22) conduit à une rotation du bras de manivelle (42) autour de son axe de rotation (C-C) et que cette rotation conduit à un déplacement de la partie (52), pouvant être ressortie, de la fourche d'attelage (36).

2. Remorque suivant la revendication 1, caractérisée par le fait que les moyens de traction sont constitués par un câble (60) qui est entouré d'une part autour d'une roue à câble (30) montée fixe par rapport au châssis (23) de la remorque et d'autre part autour d'une roue à câble (40) reliée rigidement au bras de manivelle (42), et dont les deux extrémités sont fixées au châssis du véhicule.

3. Remorque suivant la revendication 1, caractérisée par le fait que les moyens de traction sont constitués par une chaîne sans fin (60'), qui est guidée d'une part autour d'une couronne dentée (30') montée fixe par rapport au châssis (23) de la remorque et d'autre part autour d'une couronne dentée reliée au bras de manivelle (42).

4. Remorque suivant l'une des revendications précédentes, caractérisée par le fait que dans le cas d'un pivotement de la fourche d'attelage (36) autour d'un axe horizontal, la partie (52), pouvant être déployée, est déplaçable indépendamment du braquage de l'essieu orientable (22).

5. Remorque suivant l'une des revendications précédentes, caractérisée par le fait que le rapport de transmission entre l'angle de rotation ($\beta$) de l'essieu orientable (22) autour de son axe de rotation (B-B) et l'angle de rotation du bras de manivelle (42) autour de son axe de rotation (C-C) est inférieur à 1/2 et est égal de préférence à (arctg (e/c))/180°, e désignant la demi-largeur de la remorque et c la distance entre l'extrémité avant de la remorque et l'axe de rotation (B-B) de son essieu orientable (22).

FIG.1

FIG.2

0 033 873

FIG.3

0 033 873

FIG.4

FIG.5

0 033 873

FIG.6